Europäisches Patentamt

European Patent Office

Office européen des brevets

(11) Veröffentlichungsnummer: **0 209 620**
**A1**

## (12) EUROPÄISCHE PATENTANMELDUNG

(21) Anmeldenummer: 85113494.0

(22) Anmeldetag: 24.10.85

(51) Int. Cl.⁴: **B 63 B 15/00**
**B 63 B 35/82**

(30) Priorität: 25.07.85 DE 3526647

(43) Veröffentlichungstag der Anmeldung:
28.01.87 Patentblatt 87/5

(84) Benannte Vertragsstaaten:
AT BE CH FR GB IT LI LU NL SE

(71) Anmelder: Robert Thoma GmbH Rotho Kunstoffwerke
Wiesentalstrasse 10
D-7800 Freiburg(DE)

(72) Erfinder: Oppermann, Hans
Niederwihl
D-7883 Görwihl(DE)

(74) Vertreter: Brose, D. Karl, Dipl.-Ing. et al,
Patentanwälte Brose & Partner Wiener Strasse 2
D-8023 München-Pullach(DE)

(54) Rigg für ein Windsurfbrett.

(57) Die Erfindung betrifft ein Rigg für ein Segelbrett mit einem insbesondere als Hohlmast aus faserverstärktem Kunststoff ausgebildeten Mast und einem mit seinem Vorliek am Mast befestigten Segel, dessen Schothorn am Heckbeschlag eines sich quer zum Mast erstreckenden Gabel-baums befestigt ist. Der Mast (1) weist eine der Gestalt des Vorlieks (6) des Segels (2) angenäherte Vorkrümmung auf. Ferner ist der Mast (1) in seinem vorderen Bereich (23) über mindestens einen Teil der Länge mit einem Material (27) ausgebildet, welches in einer ersten Phase der elastischen Verformung des Mastes (1) in Richtung des Schothorns (8) des Segels (2) einen vergleichsweise niedrigen Elastizitätsmodul aufweist. Am Übergang in einer anschließenden zweiten Phase der elastischen Verformung steigt der Elastizitätsmodul des Materials sprunghaft oder stetig an. Hierdurch wird bei hoher Steifigkeit im Betriebszustand ein materialschonendes und kraftschonendes Trimmen des Riggs möglich.

Fig. 2

Robert Thoma GmbH rotho Kunststoffwerke,
D - 7800 Freiburg

## Rigg für ein Windsurfbrett.

Die Erfindung betrifft ein Rigg für ein Windsurfbrett mit einem insbesondere als Hohlmast aus faserverstärktem Kunststoff ausgebildeten Mast und einem mit seinem Vorliek am Mast befestigten Segel, dessen Schothorn am Heckbeschlag eines sich quer zum Mast erstreckenden Gabelbaums befestigt ist.

Bei bekannten Riggs dieser Art finden im allgemeinen aus glasfaserverstärktem Kunststoffen bestehende oder aus Aluminiumrohr gefertigte Hohlmasten Verwendung, die durch ein symmetrisches, meist konisches Rohr gebildet ist, welches die auf das jeweilige Rigg möglichst abgestimmte Biegecharakteristik aufweist. Diese jeweils gewünschten Biegeeigenschaften werden durch die geometrische Form des Mastes und seinen Materialaufbau bestimmt.

Bei modernen Hochleistungsriggs der oben angegebenen Art, insbesondere bei Verwendung von Mylar-Segeln, welche praktisch keine Dehnung aufweisen, ist man zu extrem steifen Masten übergegangen. Bei derartigen Riggs, die entsprechend dem Segelschnitt zusätzlich eine vergleichsweise starke Krümmung des Vorlieks aufweisen, müssen erhebliche Kräfte aufgebracht werden, um das Rigg optimal zu trimmen. In diesem Zusammenhang werden bei modernen Hochleistungsriggs zum Durchsetzen des Vorlieks am Vorliekspanner bereits bis zu 8-fache Flaschenzüge eingesetzt. Man hat diesbezüglich praktisch ermittelt, daß derartige Riggs im unbelasteten Zustand nach dem optimalen Trimmen Vorlieksspannungen bis zu 240 kg aufweisen. In entsprechender Größe liegt auch die hierdurch bedingte Spannung des Achterlieks bzw. der vom Schothorn zum Top und Hals führenden Kraftlinie.

In der Praxis ist es bereits vorgekommen, daß nach dem vollständigen Trimmen des Segels diesem Belastungen ohne zusätzliche Windbelastung das Segel nicht mehr standhalten kann.

Ausgehend von diesem allgemeinen Stand der Technik liegt der Erfindung die Aufgabe zugrunde, ein Rigg der eingangs genannten Art zu schaffen, welches materialschonend optimal trimmbar ist und dennoch im getrimmten Zustand dann die gewünschte hohe Steifigkeit aufweist.

Diese Aufgabe wird erfindungsgemäß im wesentlichen dadurch gelöst, daß der Mast in seinem vorderen Bereich über mindestens einen Teil seiner Länge mit einem Material ausgebildet ist, welches in einer ersten Phase der elastischen Verformung des Mastes in Richtung des Schothorns des Segels einen vergleichsweise niedrigen Elastizitätsmodul und in einer anschließenden zweiten Phase der elastischen Verformung einen vergleichsweise hohen Elastizitätsmodul aufweist, und daß der unbelastete Mast eine der Gestalt des Vorlieks des Segels angenäherte Vorkrümmung aufweist.

Durch die Erfindung wird, abgesehen von der Lösung der oben genannten Aufgabe, insbesondere der Vorteil erzielt, daß bei dem in dem erfindungsgemäßen Rigg verwendeten Mast praktisch eine zweiphasige Verhaltensweise erzielt wird, wobei der Mast in der ersten Phase relativ weich ist. Die erste Phase reicht bis zu einer Durchbiegung des Mastes, bei welcher der optimale oder endgültige Trimm des Segels erzielt ist, so daß der Vorgang des Trimmens mit wesentlich geringerem Kraftaufwand und insbesondere ausgesprochen materialschonend erfolgen kann.

In der zweiten Phase, welche dem Betriebszustand des Segels entspricht, ist der Mast, wie allgemein als vorteilhaft anerkannt, vergleichsweise steif, so daß bei den unvermeidlichen Verformungen des Riggs und Segels unter Winddruck derartigen Verformungen ein optimaler Widerstand entgegengesetzt wird.

Bei einer besonders vorteilhaften Ausgestaltung nach der Erfindung ist das Material im vorderen Bereich des Mastes derart ausgebildet und/oder angeordnet, daß die erste Phase vom unbelasteten Zustand bis zur Kurve des Vorlieks des Segels reicht. Diese Ausführungsform stellt den Idealfall dar, da hier der hohe Elastizitätsmodul bzw. die große Steifigkeit erst bei Windbeanspruchung zur Wirkung gelangt.

Eine bevorzugte Ausgestaltung der Erfindung von eigenständiger Bedeutung besteht darin, daß das Material aus einer verstärkenden Faser- und/oder Gewebeeinlage im vorderen Bereich der Wandung besteht, und daß die Faser- und/oder Gewebeeinlage in der ersten Phase mit geringem Widerstandsmoment dehnbar und in der zweiten Phase im wesentlichen starr ist.

Diese Eigenschaften lassen sich bevorzugt dadurch erzielen, daß die Fasern der Faser- und/oder Gewebeeinlage in Längsrichtung eine Welligkeit aufweisen, die der kumulierten Summe der Längung der Vorderkante des Mastes in der ersten Phase der elastischen Verformung entspricht.

Weiterhin ist es von besonderem Vorteil, in den beiden seitlichen Wandungsbereichen des Mastes über dessen Längserstreckung Werkstoff mit gegenüber der Zug- bzw. Druckspannungsseite höheren Elastizitätsmodul anzuordnen. Durch diese zusätzliche seitliche Aussteifung wird insbesondere ein Auswehen des Tops des Mastes nach Lee beim Einfallen von Boen oder unter hoher Windbelastung verhindert.

0209620

Im einzelnen ist es vorteilhaft, die verstärkenden Einlagen aus Kohlenstoffasern herzustellen.

Bei einer besonders bevorzugten Ausführungsform nach der Erfindung beträgt die Länge der Einlage im vorderen Bereich des Mastes, ausgehend von dessen Unterende, etwa 70 bis 100 % der Gesamtlänge des Mastes. Es ist offensichtlich, daß sowohl durch die Materialauswahl als auch durch Festlegung der Länge der verstärkenden Einlage eine optimale Beeinflussung der Biegeeigenschaften, insbesondere in der zweiten Phase, möglich ist.

Im folgenden wird die Erfindung anhand einer in den Zeichnungen beispielhaft veranschaulichten Ausführungsform näher erläutert.

Es zeigt:

Fig. 1 eine Gesamtansicht eines modernen Hochleistungsriggs für Windsurfbretter in Betriebsstellung;

Fig. 2 eine Schnittansicht des Mastes des Riggs gemäß Fig. 1 unmittelbar oberhalb des nur zum Teil dargestellten Gabelbaums; und

Fig. 3 eine schematische Ansicht der verschiedenen Durchbiegungszustände des Mastes in dem Rigg gemäß Fig. 1.

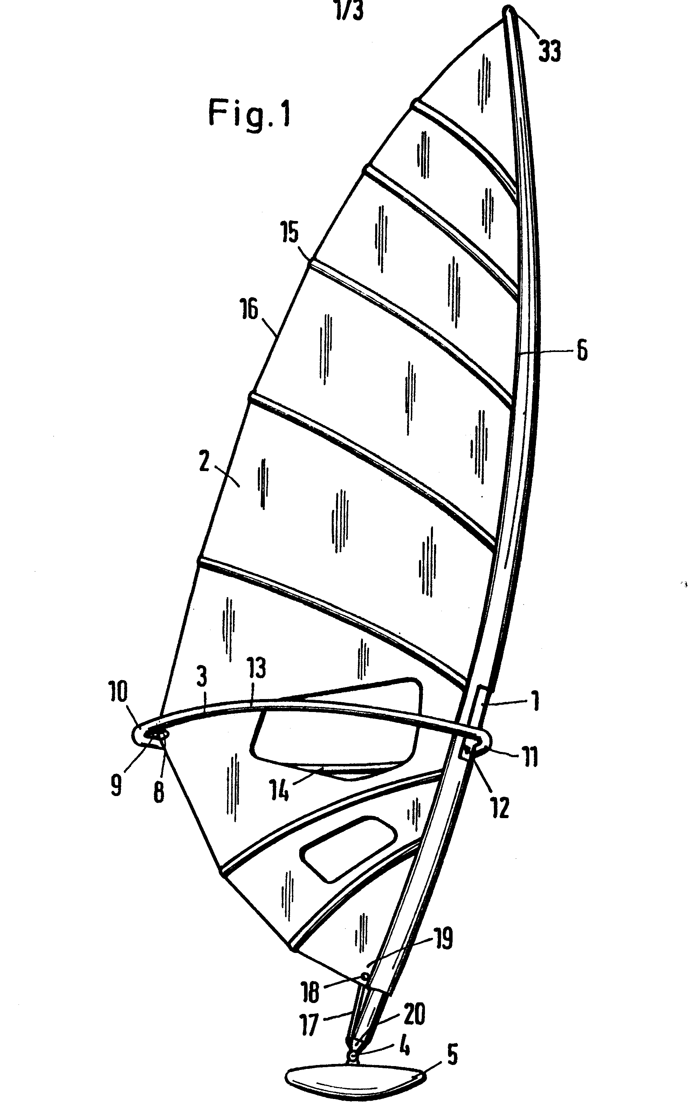

Die in Fig. 1 veranschaulichte Ausführungsform des Riggs nach der Erfindung besteht in seiner Gesamtheit aus dem Mast 1, dem Segel 2 und einem Gabelbaum 3, wobei das Rigg am Unterende des Mastes 1 durch ein Universalgelenk 4 mit dem Segelbrett 5 verbunden ist. Das Segel 2 wird in der bekannten Weise von einem Benutzer durch Halten an dem Gabelbaum relativ zum Wind und Windsurfbrett verstellt.

Wie aus Fig. 1 ersichtlich, wird das Vorliek 6 des Segels 2 durch eine Masttasche 7 gebildet, welche den Mast 1 aufnimmt und hält. Das Schot-horn 8 des Segels 2 ist an der Nock 9 des Gabelbaums 3 befestigt, welche durch einen Heckbeschlag 10 gebildet ist.

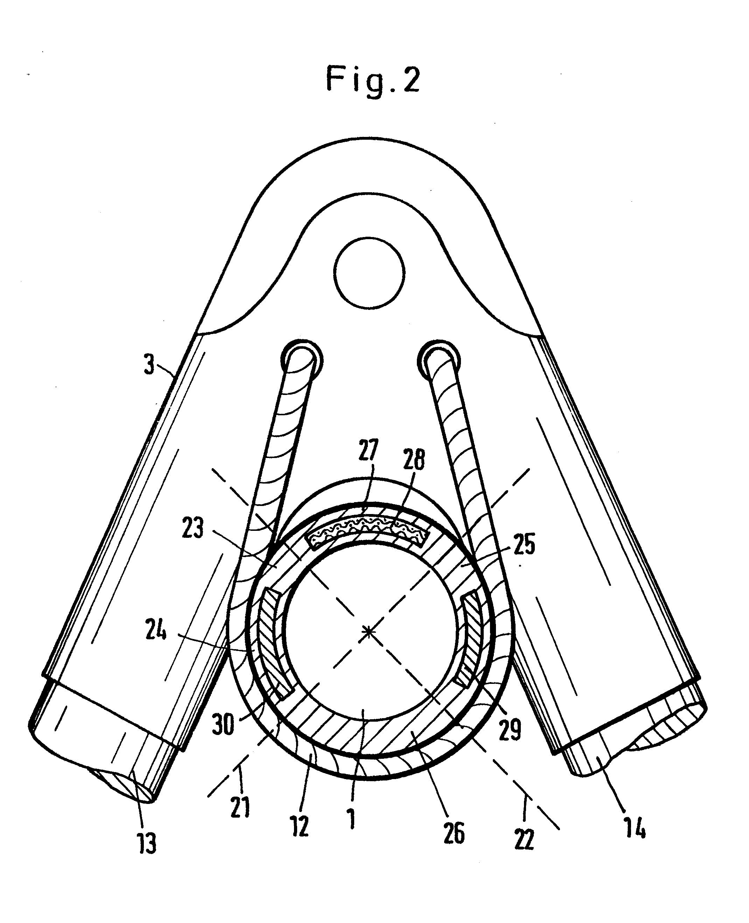

Bei der in Fig. 1 und 2 veranschaulichten Ausführungsform weist der Gabelbaum 3 eine Bugbeschlag 11 auf, über den der Gabelbaum 3 mit dem Mast 1 in der üblichen Weise mittels eines Masttampens 12 (vgl. Fig. 2) verbunden ist.

Der Gabelbaum 3 besteht aus zwei nach außen gekrümmten Bäumen 13, 14, welche vorne mittels des Bugbeschlages 11 und hinten durch den Heckbeschlag 10 miteinander verbunden sind.

Bei dem in Fig. 1 veranschaulichten Hochleistungsrigg besteht, wie an sich bekannt, das Segel 2 aus Mylar oder einem ähnlich folienbeschichteten Segelwerkstoff und ist mit einer Anzahl Spreizlatten in Querschnittform eines Tragflügelprofils aufgespannt gehalten. Bei der in Fig. 1 veranschaulichten Betriebsstellung ohne Windbeanspruchung können die bereits oben erwähnten hohen Spannungen im Achterliek 16 bzw. Vorliek 6 auftreten. Das Vorliek 6 wird in üblicher Weise durch einen Flaschenzug 17 durchgesetzt, welcher sich zwischen einer Kausch 18 im Segelhals 19 und einem Mastfußoberteil 20 erstreckt.

Zur Erläuterung der erfindungswesentlichen Einzelzeiten und Merkmale des bei dem Rigg gemäß Fig. 2 verwendeten Mastes 1 wird nunmehr auf die Schnittansicht gemäß Fig. 2 Bezug genommen. Es wird an dieser Stelle erwähnt, daß der dargestellte Wnadungsquerschnitt des Mastes 1 lediglich zum Zwecke der besseren Klarheit übertrieben dargestellt ist.

Zum Zwecke der besseren Erläuterung ist die Schnittansicht des Mastes 1 gemäß Fig. 2 durch die gestrichelten Linien 21, 22 in vier Segmente unterteilt, um hierdurch einen vorderen Bereich 23, zwei seitliche Bereiche 24, 25 und einen hinteren Bereich 26 der Wandung zu definieren.

Wie gezeigt, ist der vordere Bereich 23 aus einem Material ausgebildet, welches sich mindestens über einen Teil seiner Länge erstreckt und welches in einer ersten Phase der elastischen Verformung des Mastes 1 in Richtung des Schothorns 8 des Segels 2 einen vergleichsweise niedrigen Elastizitätsmodul und in einer anschließenden zweiten Phase der elastischen Verformung einen relativ hohen Elastizitätsmodul aufweist, was weiter unten noch näher erläutert wird.

Das in Fig. 2 allgemein mit 27 bezeichnete Material im vorderen Bereich des Mastes 1 ist bei der Ausführungsform gemäß Fig. 2 durch eine verstärkende Faser- und/oder Gewebeeinlage 28 gebildet, welche in den faserverstärkten Kunststoff der Wandung eingebettet ist. Die Einlage 28 kann sich, um die Biegeeigenschaften des Mastes beeinflussen zu können, ausgehend vom Unterende des Mastes 1, über etwa 70 bis 100 % der Gesamtlänge des Mastes 1 erstrecken. Das Material der Faser- und/oder Gewebeeinlage 28 ist derart gewählt, daß es in der ersten Phase der Verformung mit geringem Widerstandsmoment dehnbar ist und in der zweiten Phase im wesentlichen starr wird. Dies kann beispielsweise dadurch erreicht werden, daß die in Längsrichtung verlaufenden Fasern der Einlage 28 eine Welligkeit aufweisen, welche der Längung der Vorderkante in der ersten Phase entspricht.

Bei der in Fig. 2 veranschaulichten beispielhaften Ausführungsform nach der Erfindung sind ferner Maßnahmen dargestellt, um dem Mast 1 in Seitenrichtung eine erheblich höhere Biegesteifigkeit als in der von der Vorderkante zum Schothorn 8 verlaufenden Ebene zu geben. Hierzu sind die seitlichen Wandungsbereiche 24, 25 über die Längserstreckung des Mastes 1 aus einem Material hergestellt, welches gegenüber dem hinteren Wandungsbereich 26 einen höheren Elastizitätsmodul aufweist. Bei der veranschaulichten Ausführungsform wird dies dadurch erzielt, daß in den seitlichen Bereichen 24, 25 verstärkende Einlagen 29, 30 angeordnet und in den Kunststoff eingebettet sind, welche sich über die Gesamtlänge des Mastes 1 erstrecken, und welche wie auch die Einlage 28 vorzugsweise aus Kohlenstoffasern bestehen.

Die Einlagen 28, 29 und 30 können bis zu einem Viertel des Mastumfanges einnehmen.

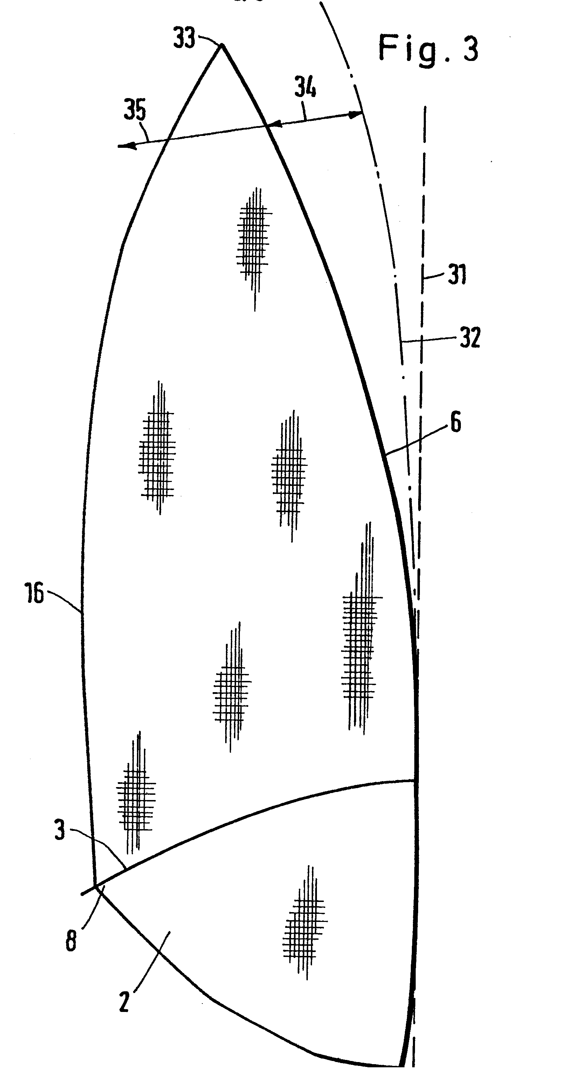

In Fig. 3 sind schematisch die Grundprinzipien nach der vorliegenden Erfindung gezeigt, wobei der Mast 1 durch seine jeweilige Längsmittellinie dargestellt ist.

Gegenüber der senkrechten und geraden Linie 31, wie sie der Mittellinie herkömmlicher Masten entspricht, weist der Mast 1 nach der vorliegenden Erfindung bereits im Ruhezustand, d. h. vor dem Einführen in die Masttasche 7, welche das Vorliek 6 des Segels 2 bildet, eine Vorkrümmung in Richtung des Schothorns 8 auf, welche durch die strichgepunktete Linie 32 veranschulicht ist. Die Vorkrümmung kann gegenüber der geraden Linie 31, bezogen auf die Gesamtlänge des Mastes, etwa zwischen einem Vierzigstel bis einem Viertel der Mastlänge betragen. Die vorgeformte Durchbiegung kann je nach Anwendungsfall und auch je nach konstruktiven Aufbau des Mastes bei der Mastherstellung unterschiedlich gewählt werden.

In Fig. 3 zeigen die durchgezogenen Linien das Rigg nach der Erfindung in fertig getrimmten Zustand, jedoch vor Windeinwirkung. Der Doppelpfeil 34 symbolisiert hierbei die erste Phase der elastischen Verformung des Mastes 1 zwischen der Linie 32 und dem Vorliek 6 des fertig getrimmten Segels 2.

Der in Richtung des Schothorns 8 zeigende Pfeil 35 gemäß Fig. 3 symbolisiert die zweite Phase der elastischen Verformung, in welcher der wesentlich höhere Elastizitätsmodul zur Wirkung gelangt. Es ist offensichtlich, daß durch diese besondere Gestaltung das Rigg nach der Erfindung einerseits materialschonend und leicht trimmbar ist und dennoch die gewünschte hohe Steifigkeit des Mastes 1 gewährleistet ist. Die Prinzipien nach vorliegender Erfindung lassen sich selbstverständlich auch auf Riggs für andere Segelfahrzeuge übertragen.

Die verstärkende Einlage 28 kann auch derart gewählt sein, daß der Obergang zwischen der ersten Phase gemäß dem Doppelpfeil 34 und der zweiten Phase gemäß dem Pfeil 35 fliessend und nicht sprunghaft ist, so daß beispielsweise eine gewisse und wünschenswerte Elastizität am Top 33 erhalten bleibt, welche beim Einfallen von Boen vorteilhaft ist. Wie bereits oben erwähnt, können diese Eigenschaften entweder durch die Länge der Einlage 28 oder die Materialauswahl oder beides beeinflußt werden.

Je nach Maß der gewünschten Biegesteifigkeit in seitlicher Richtung können in den seitlichen Bereichen 24, 25 mehr oder weniger Einlagen 29, 30 vorgesehen sein, wobei sowohl in radialer Richtung als auch in Umfangsrichtung Variationsmöglichkeiten bestehen.

Durch die zusätzlichen seitlichen Einlagen 29, 30 erreicht man auch, daß bei sonst etwa gleichbleibenden Eigenschaften in der Biegeebene Auslenkungen in seitlicher Richtung stark reduziert werden. Versuche haben gezeigt, daß diese Reduzierung in der Größenordnung von 50 % liegen kann, wodurch die aerodynamischen Verhältnisse im Segel erheblich verbessert werden.

Der Mast 1 bei dem Rigg nach vorliegender Erfindung läßt sich auch in einer Weise verwenden, wie das in einem früheren Vorschlag der Anmelderin gemäß DE-OS 33 00 349 näher beschrieben ist.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

Patentanwälte Brose & Partner
Dipl. Ing. Karl A. Brose †
Dipl. Ing. D. Karl Brose
Dipl. Phys. Michael Resch
D-8023 München-Pullach
Wiener Str. 2, Tel. Mdn. 7933071, 7933072

22. Oktober 1985
-au

Robert Thoma GmbH rotho Kunststoffwerke,
Wiesentalstraße 10, D - 7800 Freiburg

PATENTANSPRÜCHE

1. Rigg für ein Windsurfbrett mit einem insbesondere
als Hohlmast aus faserverstärktem Kunststoff ausgebildeten Mast und einem mit seinem Vorliek am Mast befestigten Segel, dessen Schothorn am Heckbeschlag
eines sich quer zum Mast erstreckenden Gabelbaums befestigt ist, d a d u r c h  g e k e n n z e i c h -
n e t , daß der Mast (1) in seinem vorderen Bereich
(23) über mindestens einen Teil seiner Länge mit einem
Material (27) ausgebildet ist, welches in einer ersten
Phase der elastischen Verformung des Mastes (1) in
Richtung des Schothorns (8) des Segels (2) einen vergleichsweise niedrigen Elastizitätsmodul und in einer
anschließenden zweiten Phase der elastischen Verformung einen relativ hohen Elastizitätsmodul aufweist,
und daß der Mast (1) eine der Gestalt des Vorlieks (6)
des Segels (2) angenäherte Vorkrümmung aufweist.

2. Rigg nach Anspruch 1, dadurch gekennzeichnet, daß das Material (27) im vorderen Bereich (23) des Mastes (1) derart ausgebildet und/oder angeordnet ist, daß die erste Phase vom unbelasteten Zustand bis zur Kurve des Vorlieks (6) des Segels (2) reicht.

3. Rigg nach Anspruch 1 oder 2, dadurch gekennzeichnet, daß das Material (27) aus einer verstärkenden Faser- und/oder Gewebeeinlage (28) im vorderen Bereich (23) der Wandung besteht, und daß die Faser- und/oder Gewebeeinlage (28) in der ersten Phase mit geringem Widerstandsmoment dehnbar und in der zweiten Phase im wesentlichen starr ist.

4. Rigg nach einem der vorhergehenden Ansprüche, dadurch gekennzeichnet, daß die Fasern der Faser- und/oder Gewebeeinlage (28) in Längsrichtung eine Welligkeit aufweisen, die der kumulierten Summe der Längung der Vorderkante des Mastes (1) in der ersten Phase der elastischen Verformung entspricht.

5. Rigg nach einem der vorstehenden Ansprüche, dadurch gekennzeichnet, daß in den beiden seitlichen Wandungsbereichen (24, 25) des Mastes (1) über dessen Längserstreckung Werkstoff mit gegenüber der Zug- bzw. Druckspannungsseite höherem Elastizitätsmodul angeordnet ist.

6. Rigg nach Anspruch 5, dadurch gekennzeichnet, daß das Material in den Seitenbereichen (24, 25) durch verstärkende Einlagen (29, 30) aus Fasern oder einem Gewebe gebildet ist.

7. Rigg nach einem der vorstehenden Ansprüche, dadurch gekennzeichnet, daß die verstärkenden Einlagen (28, 29, 30) aus Kohlenstoffasern bestehen.

8. Rigg nach einem der vorstehenden Ansprüche, dadurch gekennzeichnet, daß die Einlage (28) im vorderen Bereich (23) des Mastes (1) ausgehend von dessen Unterende etwa 70 bis 100 % der Gesamtlänge des Mastes (1) beträgt.

Fig.1

1/3

0209620

0209620

## Fig.2

3/3

Fig. 3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y,D | DE-A-3 300 349 (THOMA)<br>* Seite 6, Zeile 24 - Seite 7, Zeile 16 *<br><br>--- | 1,5-7 | B 63 B 15/00<br>B 63 B 35/82 |
| Y | GB-A-1 592 578 (TOSHITAKA)<br>* Seite 2, Zeilen 45-71 *<br><br>----- | 1,5-7 | |

|  |
|---|
| RECHERCHIERTE SACHGEBIETE (Int. Cl.4) |
| B 63 B<br>B 29 C |

Der vorliegende Recherchenbericht wurde für alle Patentansprüche erstellt.

| Recherchenort<br>DEN HAAG | Abschlußdatum der Recherche<br>14-10-1986 | Prüfer<br>KNOPS J. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82